# EUROPÄISCHE PATENTSCHRIFT

(11) **EP 2 174 199 B1**
(45) Veröffentlichungstag und Bekanntmachung des Hinweises auf die Patenterteilung: **21.11.2012**
(21) Anmeldenummer: 08801077.2
(22) Anmeldetag: 30.07.2008
(51) Int. Cl.: G05D 23/19, F24C 7/08, H05B 1/02, A21B 1/40, A23L 1/01, G05D 22/02

(54) **VERFAHREN ZUM ENERGIESPARENDEN FÜHREN EINES NAHRUNGSMITTELBEHANDLUNGSPROZESSES ODER BEHANDLUNGSRAUMREINIGUNGSPROZESSES UND GARGERÄT HIERFÜR**
METHOD FOR THE ENERGY-SAVING CONTROL OF A FOOD PROCESSING PROCESS OR A PROCESSING CHAMBER CLEANING PROCESS AND COOKING DEVICE USED THEREFORE
PROCÉDÉ POUR LA CONDUITE ÉCONOME EN ÉNERGIE D'UN PROCESSUS DE TRAITEMENT D'ALIMENTS OU D'UN PROCESSUS DE NETTOYAGE D'UNE CHAMBRE DE TRAITEMENT ET APPAREIL DE CUISSON CORRESPONDANT

(30) Priorität: 01.08.2007 DE 102007036513
(43) Veröffentlichungstag der Anmeldung: 14.04.2010
(73) Patentinhaber: Rational AG, 86899 Landsberg a. Lech (DE)
(72) Erfinder: BREUNIG, Manfred, 86956 Schongau (DE)
(74) Vertreter: Weber-Bruls, Dorothée
(86) Internationale Anmeldenummer: PCT/DE2008/001239
(87) Internationale Veröffentlichungsnummer: WO 2009/015651

(56) Entgegenhaltungen:
- CH-A5- 678 996
- DD-A1- 215 189
- JP-A- 2007 127 382
- US-A- 5 171 974

## Beschreibung

Die vorliegende Erfindung betrifft ein Verfahren zum energiesparenden Führen zumindest eines Nahrungsmittelbehandlungsprozesses in einem Nahrungsmittelbehandlungsgerät mit einem Behandlungsraum, zumindest einer Behandlungseinrichtung und einer Steuer- oder Regeleinrichtung nach dem Oberbegriff von Anspruch 1, und ein Gargerät zum Durchführen solch eines Verfahrens.

Ein gattungsgemäßes Verfahren zum Regeln eines Backprozesses ist aus der DD 215 189 A1 bekannt. Das bekannte Verfahren umfasst dabei eine Aufheizphase, eine Backphase und eine Endphase, wobei in der Backphase eine in der Aufheizphase von einer Informationsverarbeitungseinheit ermittelte Backraumtemperatur konstant gehalten und die Backphase nach Beendigung einer in der Aufheizphase von der Informationsverarbeitungseinheit als optimal errechneten Backzeit unter Berücksichtigung einer Restwärme abgeschaltet wird, so dass in der Endphase die Restwärme zum endgültigen Ausbacken genutzt werden kann.

Ein Energieoptimierungsverfahren ist in der nicht-vorveröffentlichten EP 07 009 155 beschrieben, und zwar für eine rollierende Beschickung eines Gargerätes mit Gargut, wobei eine Energieoptimierung dadurch erreicht wird, dass einem Benutzer angezeigt wird, wann welches Gargut in welche Behandlungsebene eines Garraums zu laden oder aus dem Garraum zu entfernen ist.

Die DE 41 15 489 A1 offenbart ein weiteres Energieoptimierungsverfahren, bei dem eine Vorrichtung zur Beendigung eines Garvorgangs bei Erreichen eines einstellbaren Endwertes, wie einer Backdauer oder Endkerntemperatur, sowie eine Vorrichtung zum Abschalten einer Heizenergie vor Erreichen des eingestellten Endwertes zum Einsatz kommen. Dabei ist es bekannt, dass nach Aktivierung einer Energiespartaste von einer Steuerschaltung ein Zeitpunkt zum Abschalten einer Heizenergie berechnet wird, der vor dem Erreichen des mit einer Schaltuhr eingestellten Endwertes liegt, wozu die Steuerschaltung Signale eines Temperatursensorspiesses und der Schaltuhr erhält, um einen Heizkörper entsprechend anzusteuern.

Die CH 678 996 A5 offenbart ein Verfahren zur Wärmebehandlung von Speisen in einem Backofen, bei dem die Temperatur zum Garen der Speise vorgewählt und nach einer Anfangsphase konstant gehalten wird, um schon vor Ablauf einer gewählten Behandlungszeit die Energiezufuhr zu Heizregistern zu unterbrechen oder zu reduzieren, um die Wärmekapazität des Ofens auszunutzen und Energie zu sparen.

Ein Verfahren zum Betrieb eines Elektrowärmegeräts, mit dem wenigstens ein Behältnis durch Erwärmung bezüglich seines Zustandes auf einen Endwert gebracht werden soll, ist aus der DE 198 13 550 A1 bekannt, wobei dem Elektrowärmegerät der Endwert eingegeben wird, eine Leistungsfreigabe an eine Heizeinrichtung im Wesentlichen von Fühlerdaten abhängt, die über wenigstens einen dem Behältnis zugeordneten Fühler ermittelt werden, und die Leistungsfreigabe ausgehend von vorgegebenen Daten und dem Endwert so lange nach einem vorgegebenen Steuervorgang erfolgt, bis die Fühlerdaten in einem bestimmten Bereich liegen, und ab hier die Leistungsfreigabe von den Fühlerdaten ausgehend geregelt wird.

Die DE 34 47 296 Cl offenbart eine Vorrichtung zum Steuern eines Garvorgangs in einem Dampfdruckkochgefäss, das über ein elektrisches Heizelement aufgeheizt wird. Durch Ermittlung von Werten der Temperatur - Zeit - Kennlinie in einer Aufheizphase wird die Möglichkeit geschafft, die Trägheit des Systems unter vorzeitiger Abschaltung des Heizelements zur Einhaltung der gewünschten Garzeit im Dampfdruckkochgefäss energiesparend auszunutzen.

Die US 5,171,974 betrifft ein Heizsystem für einen Ofen mit einer Vielzahl von Ofenzonen, in denen eine Vielzahl von Heizbehandlungen durchgeführt werden können, wobei für ein gegebenes Gargut zumindest ein Heizparameter und eine Ofenzone zur Platzierung des Garguts vorgegeben werden.

Die DE 10 2005 046 716 A1 offenbart ein Verfahren zur Steuerung oder Regelung eines Gargerätes, bei dem die Position eines Garguts in einem Gargerät erfasst wird und ein Garprozess im Gargeräte am Ort des Garguts energiesparend sowie das Garergebnis optimierend durchgeführt werden kann. Nach Abschluss solch eines Garverfahrens kann ein Reinigungsverfahren stattfinden, bei dem gezielt die Bereiche, in denen sich während des Garprozesses das Gargut und aus dem Gargut eventuell austretende Substanzen befunden haben, gereinigt werden, was wiederum zu einer Energieeinsparung führt.

Die JP 2007 127 382 A offenbart ein Kontrollmittel eines Gargeräts, das mit einer Temperaturerfassungseinrichtung zum Erfassen einer Temperatur in einem Behandlungsraum ausgerüstet ist und eine Heiztemperatur sowie eine Heizzeit auf der Grundlage einer Temperatur kontrolliert, die von der Temperaturerfassungseinrichtung zum Beginn eines Garvorgangs erfasst worden ist.

Aus der DE 199 45 021 A1 ist ein kerntemperaturgesteuertes Garverfahren bekannt, bei dem der Energieverbrauch bestimmt und eine Einrichtung zum Zuführen von Energie in Abhängigkeit von Messwerten eingestellt werden kann. Bei diesem bekannten Verfahren wird die Kerntemperatur eines Garguts möglichst gut auf einen vorherbestimmten SollWert geregelt. Ist das Verfahren dabei in mehrere Zeitintervalle unterteilt, wie bspw. in der DE 197 18 399 A1 beschrieben, um also bspw. am Ende des Verfahrens nicht nur eine Soll-Kerntemperatur sondern auch eine Soll-Bräunung zu erreichen, so kann bei einem Wechsel zwischen Zeitintervallen, also am Ende eines ersten Zeitintervalls, noch z. B. geheizt oder Dampf produziert werden, obwohl im folgenden, zweiten Zeitintervall eine niedrigere Temperatur oder eine niedrigere Feuchtigkeit als im ersten Zeitintervall benötigt wird. Dies dient vordergründig der Schnelligkeit des Prozesses, stellt aber tatsächlich einen unnötigen Energieverbrauch dar.

Aufgabe der vorliegenden Erfindung ist es, das gattungsgemässe Verfahren derart weiterzuentwickeln, dass eine Energieoptimierung stattfindet.

Diese Aufgabe wird erfindungsgemäss durch die Merkmale des Kennzeichens von Anspruch 1 gelöst.

Bevorzugte erfindungsgemäße Verfahren sind in den Ansprüchen 2 bis 5 beschrieben.

Mit der Erfindung wird auch ein Gargerät nach Anspruch 6 geliefert.

Der Erfindung liegt somit die überraschende Erkenntnis zugrunde, dass zusätzlich zu einer Regelung auf der Grundlage eines Soll/Ist-Wert-Vergleichs in einem Garprozess auch eine Regelung in einem Energiesparmodus aktiviert werden kann, die es ermöglicht, dass beispielsweise am Ende eines Garschrittes eine Restwärme oder Restfeuchtigkeit für einen folgenden Garschritt genutzt werden kann, ohne dass aktiv noch Wärme oder Feuchtigkeit einem Garraum, in dem ein Gargut gegart wird, zugeführt werden muss. Dabei wird insbesondere berücksichtigt, ob der folgende Garschritt einen niedrigeren, gleichen oder höheren Soll-Wert für bspw. die Temperatur oder die Feuchtigkeit als der zu regelnde Garschritt aufweist, um entweder die Dauer des zu regelnden Garschrittes zu reduzieren oder aber die Temperatur oder Feuchtigkeit im Garraum nicht weiter zu erhöhen. Dadurch kommt es insgesamt zu einer Energieeinsparung. In diesem Zusammenhang ist darauf hinzuweisen, dass bereits eine Energieeinsparung von 2 bis 4% einen erheblichen Beitrag zur Schonung unserer Ressourcen hat.

Insbesondere bei Gasgargeräten mit Wärmetauschern führt das erfindungsgemässe Verfahren nicht nur zu einer Energieeinsparung, sondern auch zu einer Reduktion der Anzahl der Schaltspiele, was zusätzlich der Lebensdauer der Bauteile zugute kommt.

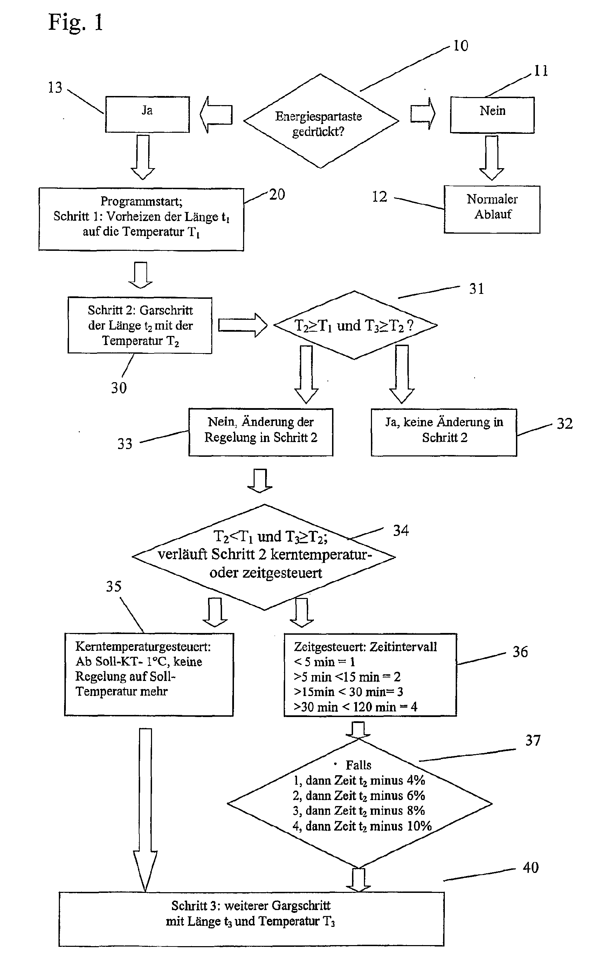

Weitere Merkmale und Vorteile der Erfindung ergeben sich aus der nachfolgenden Beschreibung, in der Ausführungsbeispiele der Erfindung anhand schematischer Zeichnungen beispielhaft erläutert werden. Dabei zeigen die Figuren 1 bis 3 jeweils Abschnitte aus erfindungsgemässen Garverfahren in Form von Flussdiagrammen.

Wie Figur 1 zu entnehmen ist, kann ein Gargerät wie bislang üblich oder nach einem erfindungsgemässen Verfahren betrieben werden. Über eine Energiespartaste (nicht gezeigt) kann nämlich entschieden werden, ob das erfindungsgemässe Verfahren durchzuführen ist (Abschnitt 10). Hat sich ein Bediener für ein konventionelles Verfahren entschieden (Abschnitt 11), verläuft das Garverfahren also in bekannter Weise ab (Abschnitt 12), wie bspw. in der DE 197 18 389 A1 beschrieben. Ist jedoch von dem Bediener die Energiespartaste aktiviert worden (Abschnitt 13), beginnt das erfindungsgemässe Verfahren, das eine Vielzahl von Garschritten aufweist, wobei jedem Schritt eine Zeitdauer t und eine Temperatur T des Wärmemediums in einem Garraum eines nicht gezeigten Gargerätes zugewiesen ist, beispielsweise umfassend einen Vorheizschnitt (t₁ T₁), einen ersten Garschritt (t₂, T₂) und einen zweiten Garschritt (t₃, T₃). So kann also ein erster Schritt der Vorheizschritt sein (Abschnitt 20), um eine gewünschte Vorheiztemperatur T₁ am Ende des Vorheizschrittes t₁ zu erhalten. Herkömmlicherweise erfolgt sodann über eine nicht gezeigte Anzeige- und Bedieneinrichtung die Aufforderung zum Beladen des Garraumes mit nicht gezeigtem Gargut. Hat eine entsprechende Beladung stattgefunden, startet der zweite Schritt des Garprogrammes, bei dem es sich um einen ersten Garschritt der Länge t₂ und der Temperatur T₂ handelt (Abschnitt 30). In diesem zweiten Schritt wird von einer nicht gezeigten Steueroder Regeleinrichtung überprüft, ob T₂ grösser, gleich oder kleiner als eine Temperatur T₁ des ersten Schrittes und grösser, gleich oder kleiner als eine Temperatur T₃ eines dritten Schritts, bei dem es sich um den zweiten Garschritt handelt, ist (Abschnitt 31). In dem Falle, in dem T₂ > T₁ und T₃ > T₂, verläuft der zweite Schritt ohne Veränderung weiter (Abschnitt 32), während jedoch bereits in dem Fall, in dem T₂ < T₁ und T₃ > T₂, eine erfindungsgemässe Zusatzregelung greift (Abschnitt 33). Die Zusatzregelung hängt wiederum davon ab, ob während des Schrittes 2 eine kerntemperaturgesteuerte oder zeitgesteuerte Garprozessführung stattfindet (Abschnitt 34). Handelt es sich um einen kerntemperaturgesteuerten ersten Garschritt, bei dem auf eine Soll-Kerntemperatur geregelt wird, so wird die entsprechende Regelung beispielsweise bereits dann beendet, wenn die Ist-Kerntemperatur 1°C unterhalb der Soll-Kerntemperatur liegt (Abschnitt 35). Handelt es sich jedoch alternativerweise um einen zeitgesteuerten ersten Garschritt, so kann es zu einer Reduktion der Länge t₂ kommen, und zwar in Abhängigkeit von der Länge t₂ selbst, siehe Abschnitte 36 und 37. Vom Schritt 2 wird dann in den Schritt 3, bei dem es sich um den zweiten Garschritt handelt (Abschnitt 40), gewechselt. Figur 1 zeigt also einen Teil eines Garverfahrens, bei dem es zu einer Energieeinsparung dann in einem ersten Garschritt, hier Schritt 2, kommt, wenn im Garraum zu Beginn des ersten Garschritts, hier durch ein Vorheizen im Schritt 1, eine Garraumtemperatur T₁ herrscht, die oberhalb der für den ersten Garschritt geforderten Garraumtemperatur T₂ liegt. Eine weitere, nicht gezeigte erfindungsgemässe Energieeinsparung erfolgt, wenn für den zweiten Garschritt, hier Schritt 3, eine Garraumtemperatur T₃ vorgegeben wird, die kleiner als die Garraumtemperatur T₂ in dem ersten Garschritt, hier Schritt 2, ist, wobei in beiden Fällen der Energieeinsparung entweder eine Regelung oder aber gleich der komplette erste Garschritt vorzeitig abgebrochen werden kann.

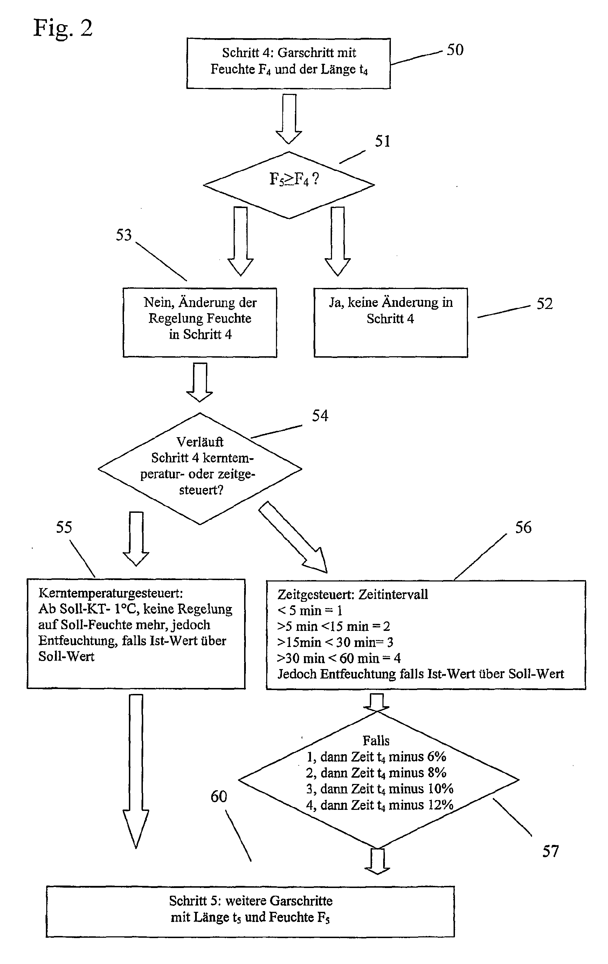

In Figur 2 sind alternative Garprozessabschnitte dargestellt, bei denen eine Feuchtigkeitsregelung stattfindet und zwar mit weiteren Garschritten. Genauer gesagt sind hier ein Schritt 4 vorgesehen, bei dem es sich um einen weiteren, ersten Garschritt handelt, dem ein Soll-Wert der Feuchtigkeit F₄ und eine Soll-Länge t₄ zugewiesen ist (Abschnitt 50), und ein weiterer zweiter Garschritt in einem Schritt 5, in dem ein Soll-Wert der Feuchtigkeit F₅ für eine SollLänge t₅ herrschen soll (Abschnitt 60). In einem nächsten Schritt 5 muss daher überprüft werden, ob die dem Folgeschritt, also zweiten Garschritt, zugewiesene Feuchtigkeit F₅ grösser oder kleiner oder gleich F₄ ist (Abschnitt 51). Ist F₅ > F₄, so tritt keine Zusatz-Regelung im Sinne der vorliegenden Erfindung ein (Abschnitt 52). Anderenfalls kommt es zu besagter Zusatzregelung (Abschnitt 53). Diese Zusatzregelung hängt nun wieder davon ab, ob im Schritt 4 eine Kerntemperaturoder Zeitsteuerung stattfindet (Abschnitt 54). In dem Fall, in dem eine Kerntemperatursteuerung stattfindet, kann ab dem Zeitpunkt die Regelung der Ist-Feuchte auf die Soll-Feuchte beendet werden, wenn die Ist-Kerntemperatur 1°C unterhalb der Soll-Kerntemperatur liegt (Abschnitt 55). Handelt es sich hingegen im Schritt 5 um ein zeitgesteuertes Verfahren, so kommt es zu einer Verkürzung der Länge t4, in Abhängigkeit von der Grösse von t₄, siehe Abschnitte 56 und 57. Also verkürzt sich t₄ bspw. um 10 %, wenn 30 min. < t₄ < 120 min. Zudem findet eine Energieeinsparung in Analogie zu der gemäss Figur 1 durch eine Berücksichtigung der Feuchtigkeit im Garraum zu Beginn des weiteren, ersten Garschritts in Schritt 4 statt. Schliesslich wird zu Schritt 5 übergegangen (Abschnitt 60).

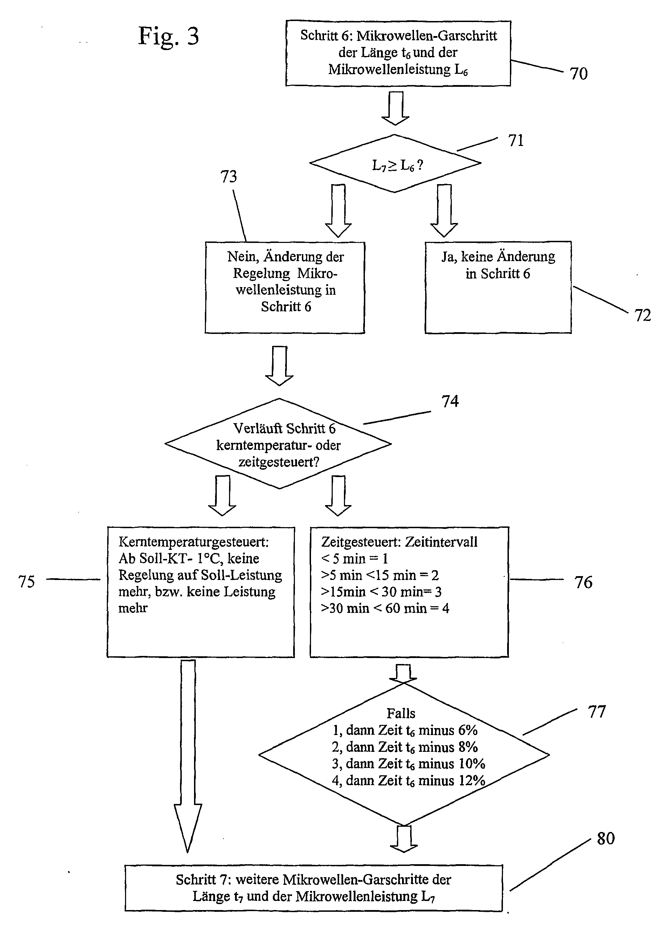

Eine weitere Alternative für Abschnitte eines erfindungsgemässen Garverfahrens ist in Figur 3 dargestellt. Bei diesen Abschnitten handelt es sich um einen Teil eines Garverfahrens, bei dem erstmals ein Mikrowellengenerator zum Einsatz kommt. Genauer gesagt kann es sich bei einem Schritt 6 um einen ersten Mikrowellen-Garschritt handeln, bei dem der Mikrowellengenerator mit einer Mikrowellenleistung L₆ eingeschaltet wird, und über eine Länge t₆, wobei L₆ und t₆ als Soll-Werte vorgegeben sind (Abschnitt 70). Zuerst muss dann überprüft werden, ob die Mikrowellenleistung L₇ eines zweiten Mikrowellen-Garschritts (Abschnitt 80) grösser, kleiner oder gleich L₆ ist (Abschnitt 71). Liegt der Fall vor, in dem L₇ ≥ L₆, findet keine Zusatzregelung statt (Abschnitt 72). Anderenfalls kommt es zu einer Implementierung einer erfindungsgemässen Zusatz-Regelung (Abschnitt 73), bei der berücksichtigt wird, dass vor dem ersten Mikrowellen-Garschritt keine Mikrowellenleistung in den Garraum abgestrahlt worden ist, und zudem wiederum zu unterscheiden ist, ob im Schritt 6 eine Kerntemperatursteuerung oder eine Zeitsteuerung durchgeführt wird (Abschnitt 74). Liegt beispielsweise eine Kerntemperatursteuerung vor, so kann die Regelung der Leistung des Mikrowellengenerators beendet werden, wenn der Ist-Kerntemperaturwert 1°C unterhalb des SollKerntemperaturwertes liegt (Abschnitt 75). Liegt hingegen eine Zeitsteuerung vor, so verkürzt sich t₆ in Abhängigkeit von der Grösse von t₆, siehe Abschnitte 76 und 77. Schliesslich wird zum Schritt 7, bei dem es sich um den zweiten Mikrowellen-Garschritt handelt, übergegangen.

Ein erfindungsgemässes Verfahren eignet sich bspw. beim Garen von Hähnchenschenkeln, das herkömmlicherweise in vier Schritte unterteil ist, nämlich wie folgt:

| | | | | |
|---|---|---|---|---|
| Schritt 1 | Vorheizen | 160°C | 80% Feuchte | |
| Schritt 2 | Kombination | 140°C | 80% Feuchte | 8 min |
| Schritt 3 | Kombination | 180°C | 60% Feuchte | 12 min |
| Schritt 4 | Heissluft | 220°C | 0% Feuchte | 10 min |

Eine Energieoptimierung ist dabei in den Schritten 2 und 3 möglich, und zwar bspw. wie mit Bezug auf Figur 1 oder 2 beschrieben.

Aber auch das Garen von Schinkenbraten kann erfindungsgemäss energieoptimiert werden. Hierbei kommen die folgenden vier Schritte zum Einsatz:

| | | | | |
|---|---|---|---|---|
| Schritt 1 | Vorheizen | 130°C | 90% Feuchte | |
| Schritt 2 | Kombination | 120°C | 90% Feuchte | KT 60°C |
| Schritt 3 | Kombination | 100°C | 90% Feuchte | KT 70°C |
| Schritt 4 | Heissluft | 180°C | 20% Feuchte | KT 73°C |

Beispielsweise kann Schritt 2 eine Energieoptimierung wie mit Bezug auf Figur 1 beschrieben und Schritt 3 eine Energieoptimierung wie mit Bezug auf Figur 2 beschrieben nutzen.

## Patentansprüche

1. Verfahren zum energiesparenden Führen zumindest eines
Nahrungsmittelbehandlungsprozesses in einem Nahrungsmittelbehandlungsgerät mit einem Behandlungsraum, zumindest einer Behandlungseinrichtung und einer Steuer - oder Regeleinrichtung, wobei
der Nahrungsmittelbehandlungsprozess in eine Vielzahl von Behandlungsschritten aufgeteilt wird, von denen einer als ein erster Behandlungsschritt ausgewählt wird, dem zumindest ein zweiter Behandlungsschritt im direkten Anschluss folgt,
während des Nahrungsmittelbehandlungsprozesses ein Nahrungsmittel im Behandlungsraum angeordnet ist, das zumindest während des ersten Behandlungsschrittes über die Behandlungseinrichtung mit trockener Hitze und/oder Feuchter Hitze und/oder Mikrowellen zwecks Garung beaufschlagt wird,
zu Beginn des Verfahrens und/oder über die Steuer- oder Regeleinrichtung dem ersten Behandlungsschritt ein erster Soll-Wert zumindest eines Behandlungsparameters und dem zweiten Behandlungsschritt ein zweiter Soll-Wert des zumindest einen Behandlungsparameters zugewiesen wird,
der Ist-Wert des Behandlungsparameters im ersten Behandlungsschritt über zumindest eine Sensiereinrichtung erfasst und mittels der Steuer- oder Regeleinrichtung über zumindest einen Teil der Dauer des ersten Behandlungsschritts auf den ersten Soll-Wert geregelt wird, und
der Behandlungsparameter bestimmt wird aus einer ersten Größe zum Klima im Behandlungsraum, die aus der Temperatur, der Feuchte und/oder dem Volumenfluss der Atmosphäre im Behandlungsraum bestimmt wird, und/oder einer zweiten Größe zur Behandlungseinrichtung, die aus der Energiezufuhr zu der Behandlungseinrichtung bestimmt wird,
**dadurch gekennzeichnet, dass**
die Steuer- oder Regeleinrichtung berücksichtigt, ob der zweite Behandlungsschritt einen niedrigeren, gleichen oder höheren Sollwert als der erste Behandlungsschritt aufweist und zur Energieeinsparung
● die Dauer des ersten Behandlungsschritts verkürzt, oder
● die Dauer der Regelung des Ist-Werts des Behandlungsparameters in dem ersten Behandlungsschritt gegenüber der Dauer des ersten Behandlungsschrittes verkürzt, und/oder
● die Behandlungseinrichtung während zumindest eines Teils des ersten Behandlungsschritts ausstellt,
wenn der zweite Soll-Wert des Behandlungsparameters betragsmäßig kleiner als der erste Soll-Wert des Behandlungsparameters ist.

2. Verfahren nach Anspruch 1, **dadurch gekennzeichnet, dass** die Verkürzung der Dauer der Regelung in dem ersten Behandlungsschritt oder die Verkürzung der Dauer des ersten Behandlungsschrittes von der Differenz zwischen dem ersten Soll-Wert und dem zweiten Soll-Wert abhängt.

3. Verfahren nach Anspruch 1 oder 2, **dadurch gekennzeichnet, dass** die Verkürzung der Dauer der Regelung in dem ersten Behandlungsschritt im Falle eines kerntemperaturgeführten Nahrungsmittelbehandlungsschrittes ausgewählt wird.

4. Verfahren nach einem der vorangehenden Ansprüche, **dadurch gekennzeichnet, dass** die Verkürzung der Dauer der Regelung in dem ersten Behandlungsschritt und/oder das Ausstellen der Behandlungseinrichtung während zumindest eines Teils des ersten Behandlungsschrittes vor dem ersten Behandlungsschritt stattfindet.

5. Verfahren nach einem der vorangehenden Ansprüche, **dadurch gekennzeichnet, dass** über eine Bedien- und/oder Anzeigeeinrichtung ein Energiesparmodus, der Nahrungsmittelbehandlungsprozess,
der erste Behandlungsschritt, der zweite Behandlungsschritt, die erste Größe, die zweite Größe, der erste Soll-Wert und/oder der zweite Soll-Wert ausgewählt werden kann bzw. können.

6. Gargerät mit einem Garraum, einer Behandlungseinrichtung, umfassend eine Heizeinrichtung, eine Kühleinrichtung, eine Feuchtigkeitszufuhreinrichtung, eine Feuchtigkeitsabfuhreinrichtung, eine Fluidzufuhreinrichtung, eine Fluidabfuhreinrichtung, eine Gebläseeinrichtung, eine Zirkulationseinrichtung, eine Reinigungseinrichtung, zumindest einer Sensiereinrichtung und einer Bedien- und/oder Anzeigeeinrichtung, **gekennzeichnet durch** eine Steuer- oder Regeleinrichtung, die zum Durchführen eines Verfahrens nach einem der vorangehenden Ansprüche eingerichtet ist.

## Claims

1. A method for the energy-saving control of at least one food processing process in a food processing device with a processing chamber, at least one processing unit and an open-loop or closed-loop control unit, wherein
the food processing process is divided into a plurality of processing steps, one of which is selected as a first processing step, which is immediately followed by at least one second processing step,
a food is arranged in the processing chamber during the food processing process, said food being treated by means of the processing unit during the first processing step with dry heat and/or moist heat and/or microwaves for the purpose of cooking it,
a first target value of at least one processing parameter is assigned to the first processing step and a second target value of the at least one processing parameter is assigned to the second processing step at the start of the processing and/or by means of the open-loop or closed-loop control unit,
the actual value of the processing parameter is recorded in the first processing step by means of at least one sensor unit and controlled by the open-loop or closed-loop control unit to the first target value for at least a part of the duration of the first processing step, and
the processing parameter is determined from a first quantity relating to the climate in the processing chamber, said first quantity being determined from the temperature, the humidity and/or the volume flow of the atmosphere in the processing chamber, and/or from a second quantity relating to the processing unit, said second quantity being determined from the energy supply to the processing unit,
**characterized in that**
the open-loop or closed-loop control unit takes into account whether the target value of the second processing step is smaller than, the same as or larger than the target value of the first processing step and, for the purpose of saving energy,
● shortens the duration of the first processing step, or
● shortens the duration of control of the actual value of the processing parameter in the first processing step in relation to the duration of the first processing step, and/or
● switches the processing unit off for at least a part of the first processing step, if the second target value of the processing parameter is smaller than the first target value of the processing parameter.

2. The method of claim 1, **characterized in that**
the shortening of the duration of control in the first processing step or the shortening of the duration of the first processing step depends on the difference between the first target value and the second target value.

3. The method of claim 1 or 2, **characterized in that**
the shortening of the duration of control in the first processing step is selected if the food processing step is core temperature-driven.

4. The method according to any one of the preceding claims, **characterized in that**
the shortening of the duration of control in the first processing step and/or the switching off of the processing unit for at least a part of the first processing step takes place before the first processing step.

5. The method according to any one of the preceding claims, **characterized in that**
an energy saving mode, the food processing process, the first processing step, the second processing step, the first quantity, the second quantity, the first target value and/or the second target value can be selected or are selected by means of an operation and/or display unit.

6. A cooking device with a cooking chamber, a processing unit, comprising a heating unit, a cooling unit, a moisture supply unit, a moisture removal unit, a fluid supply unit, a fluid removal unit, a fan unit, a circulation unit, a cleaning unit, at least one sensor unit and an operation and/or display unit, **characterized by** an open-loop or closed-loop control unit suitable for performing a method according to any one of the preceding claims.

## Revendications

1. Procédé pour effectuer, en réalisant des économies d'énergie, au moins un processus de traitement d'aliment dans un dispositif de traitement d'aliment comportant une chambre de traitement, au moins un dispositif de traitement et un dispositif de commande ou régulation, dans lequel
le processus de traitement d'aliment va être subdivisé en une pluralité d'étapes de traitement, parmi lesquelles une va être sélectionnée en tant que première étape de traitement, qui va être suivie immédiatement d'au moins une deuxième étape de traitement,
des aliments sont présents dans la chambre de traitement pendant le processus de traitement d'aliments qui, au moins pendant la première étape de traitement, sont soumis à de la chaleur sèche ou à de la chaleur humide au moyen du dispositif de traitement dans des buts de cuisson,
**caractérisé en ce que**
le dispositif de commande ou de régulation détermine si la deuxième étape de traitement présente une valeur cible inférieure, identique ou supérieure à la première étape de traitement, et
● la durée de la première étape de traitement est raccourcie, ou
● la durée de régulation de la première valeur du paramètre de traitement dans la première étape de traitement est raccourcie par rapport à la durée de la première étape de traitement, et/ou
● le dispositif de traitement est commuté pendant au moins une partie de la première étape de traitement
lorsque la seconde valeur cible du paramètre de traitement est d'un ordre de grandeur inférieur à la première valeur cible du paramètre de traitement.

2. Procédé selon la revendication 1, **caractérisé en ce que** le raccourcissement de la durée de régulation dans la première étape de traitement ou le raccourcissement de la durée de la première étape de traitement dépend de la différence entre la première valeur cible et la seconde valeur cible.

3. Procédé selon les revendications 1 ou 2, **caractérisé en ce que** le raccourcissement de la durée de régulation dans la première étape de traitement est sélectionné dans des cas où l'étape de traitement d'aliment est réalisée en fonction de la température à coeur.

4. Procédé selon l'une quelconque des revendications précédentes, **caractérisé en ce que** le raccourcissement de la durée de régulation dans la première étape de traitement et/ou la commutation du dispositif de traitement pendant au moins une partie de la première étape de traitement intervient avant la première étape de traitement.

5. Procédé selon l'une quelconque des revendications précédentes, **caractérisé en ce qu'**en mode d'économie d'énergie, le processus de traitement d'aliment, la première étape de traitement, la seconde étape de traitement, la première grandeur, la seconde grandeur, la première valeur cible et/ou la seconde valeur cible va ou vont être choisis par l'intermédiaire d'un dispositif de contrôle et/ou d'affichage

6. Appareil de cuisson comprenant une chambre de cuisson, un dispositif de traitement, de manière détaillée un dispositif de chauffage, un dispositif de refroidissement, un dispositif d'alimentation d'humidité, un dispositif de suppression d'humidité, un dispositif d'alimentation de fluide, un dispositif de suppression de fluide, un dispositif de ventilation, un dispositif de circulation, un dispositif de nettoyage, au moins un dispositif de détection et un dispositif de contrôle et/ou d'affichage, **caractérisé en ce qu'**un dispositif de commande et/ou de régulation est fourni, pour la mise en oeuvre d'un procédé selon l'une quelconque des revendications précédentes.
